# EUROPÄISCHE PATENTSCHRIFT

(11) **EP 2 443 983 B1**
(45) Veröffentlichungstag und Bekanntmachung des Hinweises auf die Patenterteilung: **17.06.2020**
(21) Anmeldenummer: 12000527.7
(22) Anmeldetag: 27.01.2012
(51) Int. Cl.: A47L 15/42, A47L 15/48, D06F 58/20, D06F 39/12, D06F 39/00

(54) **Haushaltgerät mit unten liegender Wärmepumpe**
Domestic appliance with heat pump underneath it
Appareil ménager doté d'une pompe à chaleur installée en bas

(43) Veröffentlichungstag der Anmeldung: 25.04.2012
(73) Patentinhaber: V-Zug AG, 6300 Zug (CH)
(72) Erfinder: Loichinger, Albert Johann, 8135 Langnau am Albis (CH); Dober, Ernst, 6036 Dierikon (CH); Bon, Patrick, 8810 Horgen (CH)
(74) Vertreter: Sutter, Kurt

(56) Entgegenhaltungen:
- EP-A1- 1 634 984
- EP-A1- 2 324 751
- WO-A2-2006/097901
- DE-A1- 4 212 700
- DE-C1- 3 614 389
- DE-U- 1 865 993
- US-A1- 2008 289 664

## Beschreibung

### Gebiet der Erfindung

Die Erfindung betrifft einen Geschirrspüler mit einem Gehäuse, einem im Gehäuse angeordneten Bottich und mit einer Wärmepumpe.

### Hintergrund

Geräte dieser Art sind in EP 2 206 824 und EP 2 215 955 beschrieben. Dabei dient die Wärmepumpe dazu, die Energieeffizienz des Geräts zu verbessern. Der mechanische Aufbau der Geräte wird in diesen Dokumenten allerdings nicht näher beschrieben. In WO 2006/097901 ist eine Wasch/Trocknerkombination mit einer Wärmepumpe im Sockelteil beschrieben, wobei sich zum Reinigen von Filtern der Oberteil mit der Waschmaschine vom Unterteil mit der Wärmepumpe trennen lässt.

### Darstellung der Erfindung

Es stellt sich die Aufgabe, einen Geschirrspüler dieser Art mit einem zweckmässigen mechanischen Aufbau bereitzustellen.

Diese Aufgabe wird vom Geschirrspüler gemäss Anspruch 1 gelöst. Demgemäss ist das Gehäuse des Geräts also in einen oberen Gehäuseteil und einen unteren Gehäuseteil unterteilt, wobei der untere Gehäuseteil sich unterhalb des oberen Gehäuseteils befindet und wobei die beiden Gehäuseteile voneinander trennbar sind. Die Wärmepumpe, und insbesondere deren Kompressor, Verdampfer, Drosselorgan bzw. Expansionsventil und Kondensator, wird im unteren Gehäuseteil angeordnet. Und im oberen Gehäuseteil (2) sind eine Gerätesteuerung (9) und ein Prozesswassersystem (8) umfassend eine Zirkulationspumpe und eine Abwasserpumpe angeordnet. Auf diese Weise entsteht ein modularer Aufbau, bei welchem die Komponenten der Wärmepumpe gut zugänglich sind, und bei welchem auch die Unterseite des oberen Gehäuseteils gut erreicht werden kann.

Die beiden Gehäuseteile sind in dem Sinne "voneinander trennbar", dass sie ohne Zerstörung von Teilen und reversibel voneinander getrennt werden können.

Die Anordnung der Wärmepumpe im unteren Gehäuseteil hat weiter den Vorteil, dass die schweren Komponenten (insbesondere der Kompressor) tief angeordnet sind, während die dem Benutzer zugänglichen Komponenten, insbesondere der Bottich, hoch angeordnet und gut zugänglich sind.

In einer besonders bevorzugten Ausführung ist ein Scharnier vorgesehen, das die beiden Gehäuseteile schwenkbar verbindet. Dies erleichtert den Zugang zum unteren Gehäuseteil sowie zur Unterseite des oberen Gehäuseteils. Der obere Gehäuseteil kann in einfacher Weise zur Seite geschwenkt werden. Kompressoren dürfen nicht gekippt werden. Ein weiterer Vorteil ist somit, dass der Kompressor auch im Servicefall immer in der aufgestellten Lage bleibt.

Wie insbesondere in EP 2 206 824 gelehrt, kann der Wärmepumpe in thermischem Kontakt mit einem Tank stehen. Ein derartiger Tank, insbesondere in Form eines Wassertanks, wird vorzugsweise auch im unteren Gehäuseteil angeordnet.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 einen Schnitt durch einen Geschirrspüler, und
Fig. 2 den Geschirrspüler nach Fig. 1 mit umgeschwenkten oberen Gehäuseteil.

### Wege zur Ausführung der Erfindung

In den Figuren wird die Erfindung in Form eines Geschirrspülers dargestellt. Dieser besitzt ein Gehäuse 1, welches in einen oberen Gehäuseteil 2 und einen unteren Gehäuseteil 3 unterteilt ist.

Im oberen Gehäuseteil 2 befindet sich ein Bottich 5, dessen Innenraum für den Benutzer über eine Benutzertüre 6 an der Vorderseite 7 des Geräts zugänglich ist. In diesem Bottich wird das Spülgut in bekannter Weise gereinigt.

Die beiden Gehäuseteile 2, 3 sind über ein Scharnier 4 schwenkbar miteinander verbunden. Im gezeigten Beispiel besitzt das Scharnier 4 eine horizontale Schwenkachse im Bereich der Vorderseite 7 oder einer anderen Seite des Geräts.

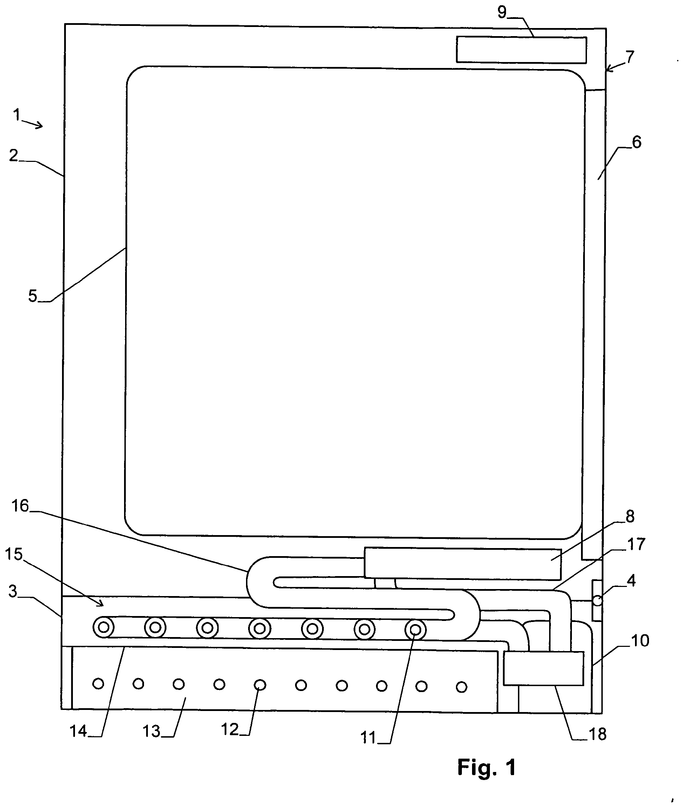

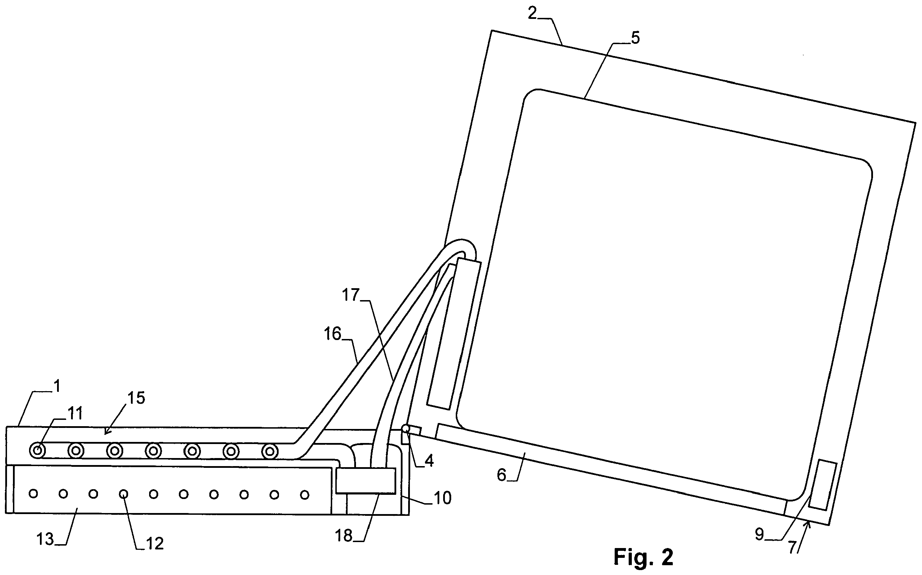

Das Scharnier 4 erlaubt es, die beiden Gehäuseteile 2, 3 aus der in Fig. 1 gezeigten Normalposition in die in Fig. 2 gezeigte Wartungsposition zu bringen. In der Normalposition befindet sich der obere Gehäuseteil 2 vertikal über dem unteren Gehäuseteil 3, so dass der obere Gehäuseteil 2 auf dem unteren Gehäuseteil 3 ruht und der untere Gehäuseteil 3 einen Sockel des Geräts bildet. In der in Fig. 2 gezeigten Wartungsposition ist der obere Gehäuseteil 2 gegenüber der Normalposition um etwas mehr als 90° verschwenkt worden, so dass er am Boden aufliegt. Dadurch wird das Innere des unteren Gehäuseteils 3 von oben zugänglich, ebenso wie die Unterseite des oberen Gehäuseteils.

Im oberen Gehäuseteil 2 befindet sich ein Prozesswassersystem 8, das in den Figuren nur schematisch als Funktionsblock dargestellt ist. Es umfasst insbesondere eine Zirkulationspumpe sowie eine Abwasserpumpe. Erstere dient dazu, das Prozesswasser in einem Kreislauf umzupumpen, Zweitere dient dem Abführen von nicht mehr benötigtem Prozesswasser. Entsprechende Prozesswassersysteme sind für Geschirrspüler und Waschmaschinen bekannt, beispielsweise aus EP 2 206 824 und EP 2 215 955. Bei einem Geschirrspüler sind im Bottich 5 zudem in bekannter Weise Sprüharme (nicht gezeigt) vorgesehen, durch welche das Prozesswasser im Kreislauf gepumpt wird.

Im oberen Gehäuseteil ist weiter eine Steuerung 9 des Geräts angeordnet.

Im unteren Gehäuseteil ist eine Wärmepumpe umfassend einen Kompressor 10, einen Kondensator 11, ein Expansionsventil (nicht gezeigt) sowie einen Verdampfer 12 vorgesehen. Beim Kondensator 11 und dem Verdampfer 12 handelt es sich vorzugsweise um Metallrohre mit hoher Wärmeleitfähigkeit, z.B. um Kupferrohre (oder Aluminium oder Edelstahl).

Die Funktionsweise der Wärmepumpe entspricht im vorliegenden Beispiel im Wesentlichen jener gemäss EP 2 206 824, d.h. sie hat die Aufgabe, dem Prozesswasser bei Bedarf Wärme zuzuführen. Diese Wärme wird wie bei EP 2 206 824 einem Wassertank 13 entzogen. Dabei wird der Wassertank 13 abgekühlt, vorzugsweise unter den Gefrierpunkt des sich darin befindlichen Wassers. Unter "Wasser" ist dabei eine Flüssigkeit zu verstehen, welche zumindest aus 25% Wasser besteht. Anstelle von Wasser kann sich jedoch auch ein anderes Wärmespeichermaterial im Tank 13 befinden.

Der Tank 13 ist im unteren Gehäuseteil angeordnet und steht in thermischem Kontakt mit dem Verdampfer 12 der Wärmepumpe. Der Verdampfer 12 verläuft in Schleifen oder Windungen, insbesondere mäanderförmig, durch den Tank 13, um eine grosse Wärmeübergangs-Oberfläche zu erreichen.

Oberhalb des Tanks 13 befindet sich der Kondensator 11. Vorzugsweise ist er vom Innenraum des Tanks 13 durch einen Deckel 14 getrennt. Der Deckel 14 kann wärmeisoliert sein. Der Kondensator 11 ist Teil eines über dem Tank 13 angeordneten Koaxial-Wärmetauschers 15, durch welchen Prozesswasser aus dem oberen Gehäuseteil 2 geführt wird, um dieses Prozesswasser zu erwärmen. Flexible Schläuche 16, 17 dienen dazu, den Wärmetauscher 15 mit dem Prozesswassersystem 8 im oberen Gehäuseteil 2 zu verbinden. Die Schläuche sind so ausgelegt, dass sie die Schwenkbewegung zwischen der Normalposition (Fig. 1) und der Wartungsposition (Fig. 2) ohne Schaden zulassen oder einfach oder automatisch getrennt werden können.

Anstelle oder zusätzlich zu den flexiblen Schläuchen 16, 17 können auch Steckverbindungen eingesetzt werden.

Im unteren Gehäuseteil 3 ist weiter eine Pumpe 18 vorgesehen, welche dazu dient, das Prozesswasser zwischen oberem und unterem Gehäuseteil umzupumpen. Alternativ kann auf diese Pumpe verzichtet werden, indem der Kondensator mit der Umwälzpumpe des Geschirrspülers versorgt wird. Eine wichtige Aufgabe der Pumpe 18 ist es, Prozesswasser aus dem Wärmetauscher 15 in den oberen Gehäuseteil zu fördern und den Wärmetauscher 15 so zu entleeren, um Standwasser zu vermeiden. Damit wird die Gerätehygiene verbessert und Geruchsbildung vermieden.

Der Kompressor 10 der Wärmepumpe ist seitlich des Tanks 13, d.h. horizontal neben dem Tank, angeordnet, so dass er trotz seiner Höhe gut im unteren Gehäuseteil 3 Platz findet.

Die gezeigte Anordnung erlaubt einen kompakten Aufbau der im Zusammenhang mit der Wärmepumpe benötigten Komponenten.

Da die ganze Wärmepumpe im unteren Gehäuseteil angeordnet ist, kann sie einfach ausgewechselt werden. Dies ist deshalb von besonderer Bedeutung, weil eine Reparatur allfälliger Schäden an der Wärmepumpe und des Kältemittelkreises in der Regel nicht vor Ort, sondern in einer Werkstatt durchgeführt werden muss.

Da zudem die wichtigsten, im Zusammenhang mit der Wärmepumpe benötigten Komponenten (insbesondere der Kompressor 10, der Verdampfer 11, der Kondensator 12, der Tank 13 und gegebenenfalls die Pumpe 18) im unteren Gehäuseteil 3 angeordnet sind, während sich die für die Arbeit des Geräts auch ohne Wärmepumpe erforderlichen Komponenten, insbesondere die Gerätesteuerung 9 und das Hydrauliksystem 8, mit Zirkulationspumpe sowie Abwasserpumpe, im oberen Gehäuseteil befinden, ergibt sich ein modulares Gerätesystem, das es einem Haushaltsgeräte-Hersteller in einfacher Weise erlaubt, bei einer Geräteserie eine Ausführung mit und eine Ausführung ohne Wärmepumpe anzubieten. Das modulare System gibt Vorteile in der Montage oder auch in der Endprüfung.

Zur Montage des Geräts werden zunächst der obere Gehäuseteil 2 und der untere Gehäuseteil 3 über das Scharnier 4 miteinander in der in Fig. 2 gezeigten Wartungsposition miteinander verbunden. Sodann werden die Schläuche 16 und 17 montiert. Dann kann der obere Teil in die in Fig. 1 gezeigte Normalposition verschwenkt werden.

Ein weiterer Vorteil ist es, dass im Servicefalle das Gerät von einer einzelnen Person problemlos geöffnet werden kann. Dies erspart Kosten für eine zweite Person oder eine Vorrichtung, die zum Trennen des oberen Geräteteiles erforderlich wäre.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Wasser führender Geschirrspüler, mit einem Gehäuse (1), einem im Gehäuse (1) angeordneten Bottich (5) und einer Wärmepumpe (10, 11, 12), **dadurch gekennzeichnet, dass** das Gehäuse einen oberen Gehäuseteil (2) und einen unterhalb des oberen Gehäuseteils (2) angeordneten unteren Gehäuseteil (3) aufweist, wobei die beiden Gehäuseteile voneinander mindestens teilweise trennbar sind, wobei die Wärmepumpe (10, 11, 12) im unteren Gehäuseteil (3) angeordnet ist und wobei im oberen Gehäuseteil (2) eine Gerätesteuerung (9) und ein Prozesswassersystem (8) umfassend eine Zirkulationspumpe und eine Abwasserpumpe angeordnet sind.

2. Geschirrspüler nach Anspruch 1, wobei die Wärmepumpe (10, 11, 12) einen Kompressor (10), einen Verdampfer (11) und einen Kondensator (12) aufweist, die im unteren Gehäuseteil (3) angeordnet sind.

3. Geschirrspüler nach einem der vorangehenden Ansprüche mit einem Scharnier (4), das die beiden Gehäuseteile (2, 3) schwenkbar verbindet.

4. Geschirrspüler nach Anspruch 3, wobei das Scharnier (4) eine Schwenkbewegung der beiden Gehäuseteile (2, 3) um mindestens 90° erlaubt

5. Geschirrspüler nach einem der Ansprüche 3 oder 4 mit einer Benutzertüre (6) an einer Vorderseite (7) des Geschirrspülers, wobei das Scharnier (4) eine horizontale, an einer Seite(7) liegende Schwenkachse hat.

6. Geschirrspüler nach einem der vorangehenden Ansprüche, wobei im unteren Gehäuseteil (3) mindestens ein Wärmetauscher (15) angeordnet ist, der über mindestens einen flexiblen Schlauch (16, 17) oder über mindestens eine Steckverbindung mit einem Prozesswassersystem (8) im oberen Gehäuseteil (2) verbunden ist.

7. Geschirrspüler nach den Ansprüchen 3 und 6, wobei der Schlauch derart ausgestaltet ist, dass er eine Schwenkbewegung der Gehäuseteile (2, 3) zwischen einer Normalposition und einer Wartungsposition zulässt, insbesondere eine Schwenkbewegung um mindestens 90°.

8. Geschirrspüler nach einem der Ansprüche 6 oder 7, wobei im unteren Gehäuseteil (3) eine Pumpe (18) angeordnet ist, um Prozesswasser aus dem Wärmetauscher (15) in den oberen Gehäuseteil (2) zu pumpen.

9. Geschirrspüler nach einem der vorangehenden Ansprüche, wobei im unteren Gehäuseteil (3) ein Tank (13), insbesondere ein Wassertank, angeordnet ist, der in thermischem Kontakt mit einem Verdampfer (11) der Wärmepumpe (10, 11, 12) steht.

10. Geschirrspüler nach Anspruch 9, wobei oberhalb des Tanks (13) im unteren Gehäuseteil (3) ein Kondensator (12) der Wärmepumpe (10, 11, 12) angeordnet ist.

11. Geschirrspüler nach den Ansprüchen 6 und 10, wobei der Wärmetauscher (15) ebenfalls oberhalb des Tanks (13) angeordnet ist.

12. Geschirrspüler nach einem der Ansprüche 9 bis 11, wobei ein Kompressor (10) der Wärmepumpe (10, 11, 12) seitlich vom Tank (13) angeordnet ist.

## Claims

1. A water-conducting dishwasher comprising a casing (1), a tub (5) arranged in the casing (1) and a heat pump (10, 11, 12), **characterised in that** the casing has an upper casing part (2) and a lower casing part (3) arranged below the upper casing part (2), wherein the two casing parts can be at least partially separated from each other, wherein the heat pump (10, 11, 12) is arranged in the lower casing part (3) and wherein a device control (9) and a process water system (8) comprising a circulation pump and a waste water pump are arranged in the upper casing part (2).

2. Dishwasher according to claim 1, wherein the heat pump (10, 11, 12) comprises a compressor (10), an evaporator (11) and a condenser (12) arranged in the lower casing part (3).

3. Dishwasher according to one of the preceding claims with a hinge (4) pivotally connecting the two casing parts (2, 3).

4. Dishwasher according to claim 3, wherein the hinge (4) allows a pivoting movement of the two casing parts (2, 3) by at least 90°.

5. Dishwasher according to one of claims 3 or 4 with a user door (6) on a front side (7) of the dishwasher, wherein the hinge (4) has a horizontal pivot axis located on one side (7).

6. Dishwasher according to one of the preceding claims, wherein in the lower casing part (3) at least one heat exchanger (15) is arranged, which is connected via at least one flexible hose (16, 17) or via at least one plug connection to a process water system (8) in the upper casing part (2).

7. Dishwasher according to claims 3 and 6, wherein the hose is adapted in such a way that it permits a pivoting movement of the casing parts (2, 3) between a normal position and a maintenance position, in particular a pivoting movement by at least 90°.

8. Dishwasher according to one of claims 6 or 7, wherein a pump (18) is arranged in the lower casing part (3) in order to pump process water from the heat exchanger (15) into the upper casing part (2).

9. Dishwasher according to one of the preceding claims, wherein a tank (13), in particular a water tank, is arranged in the lower casing part (3), which is in thermal contact with an evaporator (11) of the heat pump (10, 11, 12).

10. Dishwasher according to claim 9, wherein a condenser (12) of the heat pump (10, 11, 12) is arranged above the tank (13) in the lower casing part (3).

11. Dishwasher according to claims 6 and 10, wherein the heat exchanger (15) is also arranged above the tank (13).

12. Dishwasher according to one of claims 9 to 11, wherein a compressor (10) of the heat pump (10, 11, 12) is arranged laterally of the tank (13).

## Revendications

1. Lave-vaisselle à acheminement d'eau, avec un corps (1), une cuve (5) disposée dans le corps (1) et une pompe à chaleur (10, 11, 12), **caractérisé en ce que** le corps présente une partie de corps supérieure (2) et une partie de corps inférieure (3) disposée sous la partie de corps supérieure (2), dans lequel les deux parties de corps peuvent être séparées l'une de l'autre au moins en partie, dans lequel la pompe à chaleur (10, 11, 12) est disposée dans la partie de corps inférieure (3) et dans lequel une commande d'appareil (9) et un système à eau de traitement (8) comprenant une pompe de circulation et une pompe pour eaux usées sont disposés dans la partie de corps supérieure (2).

2. Lave-vaisselle selon la revendication 1, dans lequel la pompe à chaleur (10, 11, 12) présente un compresseur (10), un évaporateur (11) et un condensateur (12), qui sont disposés dans la partie de corps inférieure (3).

3. Lave-vaisselle selon l'une quelconque des revendications précédentes avec une charnière (4), qui relie de manière à pouvoir faire pivoter les deux parties de corps (2, 3).

4. Lave-vaisselle selon la revendication 3, dans lequel la charnière (4) permet un mouvement de pivotement des deux parties de corps (2, 3) autour d'au moins 90°.

5. Lave-vaisselle selon l'une quelconque des revendications 3 ou 4 avec une porte pour utilisateur (6) au niveau d'un côté avant (7) du lave-vaisselle, dans lequel la charnière (4) a un axe de pivotement horizontal, situé au niveau d'un côté (7).

6. Lave-vaisselle selon l'une quelconque des revendications précédentes, dans lequel est disposé dans la partie de corps inférieure (3) au moins un échangeur de chaleur (15), qui est relié à un système à eau de traitement (8) dans la partie de corps supérieure (2) par l'intermédiaire d'au moins un tube flexible (16, 17) ou par l'intermédiaire d'au moins un système de liaison par enfichage.

7. Lave-vaisselle selon les revendications 3 et 6, dans lequel le tube est configuré de telle manière qu'il autorise un mouvement de pivotement des parties de corps (2, 3) entre une position normale et une position d'attente, en particulier un mouvement de pivotement d'au moins 90°.

8. Lave-vaisselle selon l'une quelconque des revendications 6 ou 7, dans lequel une pompe (18) est disposée dans la partie de corps inférieure (3) pour pomper de l'eau de traitement provenant de l'échangeur de chaleur (15) dans la partie de corps supérieure (2).

9. Lave-vaisselle selon l'une quelconque des revendications précédentes, dans lequel est disposé dans la partie de corps inférieure (3) un réservoir (13), en particulier un réservoir d'eau, qui est en contact thermique avec un évaporateur (11) de la pompe à chaleur (10, 11, 12).

10. Lave-vaisselle selon la revendication 9, dans lequel un condensateur (12) de la pompe à chaleur (10, 11, 12) est disposé au-dessus du réservoir (13) dans la partie de corps inférieure (3).

11. Lave-vaisselle selon les revendications 6 et 10, dans lequel l'échangeur de chaleur (15) est disposé également au-dessus du réservoir (13).

12. Lave-vaisselle selon l'une quelconque des revendications 9 à 11, dans lequel un compresseur (10) de la pompe à chaleur (10, 11, 12) est disposé à côté du réservoir (13).
